# EUROPÄISCHE PATENTSCHRIFT

(11) **EP 3 118 085 B1**
(45) Veröffentlichungstag und Bekanntmachung des Hinweises auf die Patenterteilung: **26.12.2018**
(21) Anmeldenummer: 16178439.2
(22) Anmeldetag: 07.07.2016
(51) Int. Cl.: B62D 5/04, B62D 5/09

(54) **LENKSYSTEM FÜR EINE ARBEITSMASCHINE**
STEERING SYSTEM FOR A WORKING MACHINE
SYSTEME DE DIRECTION POUR UNE MACHINE DE TRAVAIL

(30) Priorität: 17.07.2015 DE 102015009253
(43) Veröffentlichungstag der Anmeldung: 18.01.2017
(73) Patentinhaber: Liebherr-Werk Bischofshofen GmbH, 5500 Bischofshofen (AT)
(72) Erfinder: Hettegger, Mario, 5611 Grossarl (AT)
(74) Vertreter: Herrmann, Uwe

(56) Entgegenhaltungen:
- DE-A1- 19 818 860
- DE-A1-102011 009 822
- US-A1- 2014 182 277

## Beschreibung

Die Erfindung betrifft ein elektrohydraulisches Lenksystem für mobile Arbeitsmaschinen, insbesondere für Radlader, wobei die hydraulische Lenkung mittels einer elektrischen Positionsregelung erfolgt.

Für Lenkanlagen von Baumaschinen besteht aufgrund des vorhandenen Gefahrenpotentials die Notwendigkeit, deren Funktionstüchtigkeit ständig zu überwachen und sicherzustellen. Diese Forderung betrifft sämtliche Bauteile der Steuerungskette einer Lenkanlage, unabhängig von der Art der angewandten Technik, d.h. die Funktionstüchtigkeit muss für mechanische, elektrische und hydraulische Bauteile gleichermaßen sichergestellt werden.

Bei einer Vielzahl von Maschinenfunktionen kann es ausreichend sein, einen Fehler zu erkennen und die Funktion im Fehlerfall einfach still zu setzen, in der Regel durch einfache Abschaltung der gesamten Funktion. Eine solche Vorgehensweise ist jedoch bei Lenkanlagen undenkbar, da eine Deaktivierung des Lenksystems nicht als sicherer Zustand bewertet werden kann, insbesondere wenn das Fahrzeug im Moment des Fehlerauftritts noch in Bewegung ist. Eine Deaktivierung der Lenkfunktion könnte in diesem Fall zu erheblichen Folgen führen. Stattdessen müssen moderne Lenksysteme im Fehlerfall ein Überführen des Fahrzeugs in einen sicheren Zustand gewährleisten, d.h. das Fahrzeug muss zumindest mit beschränkter Lenkfunktion sicher in den Stillstand verbracht werden können. Die Lenkanlage muss demnach auch im Fehlerfall zumindest eine Notfunktion zur Fahrzeuglenkung bereitstellen.

In der DE 198 18 860 A1 wird ein Verfahren und Einrichtung zur Detektion und Lokalisierung von Sensorfehlern in Kraftfahrzeugen angeführt. Hierzu wird ein Messsignal und ein Schätzsignal basierend auf einem Kalman-Filter verwendet. Die Abweichung zwischen Mess- und Schätzsignal wird als Residuum bezeichnet, wobei bei einer Überschreitung betreffender Abweichung ein Fehlersignal ausgegeben wird.

In der DE 10 2004 058 359 A1 wird ein Verfahren zur Fahrbewegungssteuerung eines Fahrzeugs beschrieben. Das Berechnungsergebnis des mathematischen Modells wird mit den realen Messwerten verglichen. Das mathematische Modell des Fahrzeugs wird in 3 Bereiche aufgeteilt. Dieses dreiteilige Modell setzt sich aus den Modellen der Aktoren, Sensoren und der Bewegung des Fahrzeugs zusammen. Das Schätzverfahren wird nach Kalman oder Least Square durchgeführt. Das Ziel ist es das mehrteilige mathematische Modell so zu modifizieren, dass die Ungenauigkeiten des Modells online minimiert werden.

Die Offenbarung der DE 10 2011 009 822 A1 zeigt ein Lenksystem, das sämtliche Merkmale des Oberbegriffs des Anspruchs 1 aufweist.

Der vorliegenden Erfindung liegt daher die Aufgabe zugrunde, ein elektrohydraulisches Lenksystem für eine Arbeitsmaschine aufzuzeigen, das auf die Besonderheiten elektrohydraulischer Lenkungen eingeht und mögliche Fehler zuverlässig erkennt.

Gelöst wird diese Aufgabe durch ein positionsgeregeltes, elektrohydraulisches Lenksystem gemäß den Merkmalen des Anspruchs 1. Vorteilhafte Ausgestaltungen des Lenksystems sind Gegenstand der abhängigen Unteransprüche.

Erfindungsgemäß wird ein positionsgeregeltes, elektrohydraulisches Lenksystem für eine Arbeitsmaschine vorgeschlagen, dass sich durch wenigstens einen hydraulischen Lenkkreis sowie wenigstens einen Steuerkreis zur Ansteuerung des hydraulischen Lenkkreises zusammensetzt. Der hydraulische Lenkkreis umfasst zumindest ein Lenkventil und wenigstens einen Lenkhydraulikzylinder für die Lenkbewegung. Eine eigene Hydraulikpumpe für die Druckversorgung des Hydraulikzylinders kann optional vorgesehen sein. Der Lenkkreis kann mehr als einen Hydraulikzylinder umfassen, beispielsweise wenigstens einen pro Fahrzeugseite. Es kann sich hierbei um eine Knicklenkung oder eine Achssschenkellenkung handeln, wobei sich bei einer Tandemausführung der Hydraulikzylinder zumindest zwei Hydraulikzylinder gegengleich um zumindest eine Achse bewegen.

Der Steuerungskreis kann elektrischer oder alternativ ebenfalls hydraulischer Natur sein. Denkbar ist auch eine Mischform. Der Steuerungskreis umfasst eine Steuereinheit, wenigstens einen Regler für die Positionsregelung, ein Positionsmesssystem zur Erfassung der Regelgröße und Steuereingabemittel zur Eingabe einer Führungsgröße für den Regler. Der Regler erzeugt basierend auf den Eingangssignalen Steuersignale für die Ansteuerung des oder der Lenkventile des hydraulischen Lenkkreises. Der verwendete Regler kann beispielsweise ein PID-Regler, Kompensationsregler oder Zustandsregler sein.

Die dem Regler zugeführte Regelgröße, vorzugsweise der Lenkwinkel der Arbeitsmaschine, wird mittels des Positionsmesssystems erfasst, wobei das Positionsmesssystem Mittel zur Erzeugung redundanter Positionsmessspuren umfasst. Denkbar ist eine Ausführung des Positionsmesssystems mit redundanter Sensorik, d.h. mit wenigstens zwei redundanten Messwertaufnehmern, die redundante Messwertspuren erzeugen. Alternativ ist eine Ausführung mit einem Messwertaufnehmer, der wenigstens zwei redundante Messwertspuren liefert, denkbar.

Das wenigstens eine Steuereingabemittel umfasst wenigstens ein Bedienelement, so zum beispielsweise in Form eines Steuerjoysticks für die Eingabe der gewünschten Führungsgröße, insbesondere des beabsichtigten Lenkwinkels.

Die integrierte Steuerung umfasst wenigstens einen Kalman-Filter, der vorzugsweise softwaremäßig innerhalb der Steuerung implementiert ist. Der Kalman-Filter kann um einen Fehlererkennungsblock erweitert sein, der anhand der redundanten Messspuren des Positionsmesssystemsignals einen Fehlerfall des Messsystems erkennen kann. Es wird angemerkt, dass sich der Fehlererkennungsblock auch örtlich außerhalb des Kalman-Filters, beispielsweise innerhalb des Positionssensors oder jeder anderen beschriebenen Steuerungs- oder zusätzlichen Steuerungseinheit befinden kann. Grundsätzlich kann der Kalman-Filter und der Fehlererkennungsblock als eine Einheit oder auch als gesonderte Einheiten ausgebildet sein, die z.B. räumlich voneinander beabstandet sind.

Die Zusammenarbeit von Fehlererkennungsblock und Kalman-Filter ermöglicht die Aufrechterhaltung der Lenkfunktion auch bei Ausfall des Positionsmesssystems, indem der Kaiman-Filter einen Schätzwert der Regelgröße für die weitergehende Positionsregelung ermittelt und dem Regler zur Verfügung stellt. Das Fahrzeug kann mit funktionstüchtiger Lenkung sicher in den Stillstand verbracht werden.

Gemäß einer möglichen Ausführungsform sieht der Fehlererkennungsblock Mittel zum Vergleich der anliegenden redundanten Messspuren vor. Durch Kreuzvergleich können Unstimmigkeiten erkannt werden. Ein Fehlerfall wird durch das Mittel vorzugsweise bei Ausfall einer oder beider Messspuren erkannt. Ein Ausfall einer Messspur kann auch dann angenommen werden, wenn der gelieferte Messwert außerhalb eines sinnvollen Wertebereichs liegt. Ferner kann ein Fehlverhalten angenommen werden, wenn es zwischen beiden Messspuren zu Abweichungen außerhalb eines vertretbaren Toleranzbereiches kommt. Diese Vorgehensweise erlaubt die Erkennung einer Leitungsunterbrechung zwischen Positionsmesssystem und Fehlererkennungsblock, eines Kurzschlusses oder eines Signaldrifts zwischen den redundanten Messsignalen.

Denkbar ist es, dass im Fehlerfall der als valide erachtete Messwert für die Regelung verwendet wird. Vorstellbar ist jedoch ebenfalls, dass bereits bei auftretenden Abweichungen zwischen den Messspuren keiner der Messwerte für die Regelung herangezogen wird. Der Fehiererkennungsblock sieht eine Entscheidungslogik vor, die auf Grundlage der vorgenannten Kriterien eine Entscheidung fällt, ob als Ist-Größe wenigstens einer der redundant vorliegenden Messwerte herangezogen wird oder alternativ für den Eingang des Reglers eine durch den Kalman-Filter geschätzte Regelgröße als Eingangssignal bereitgestellt wird.

Im fehlerfreien Fall wird demgegenüber die gemessene Positionsmessgröße oder eine Kombination aus Positionsmessgröße und Schätzwert zur Positionsregelung bereitgestellt. Beim Auftreten eines Fehlerfalls wird automatisch auf die geschätzte Regelgröße geschaltet.

Der Kalman-Filter kann innerhalb der Steuerung als Softwarebaustein implementiert sein. Der Kaiman-Filter dient zum Schätzen der Regelgröße, insbesondere des Lenkwinkels, besonders bevorzugt des Knickwinkels bei Verwendung einer Knickwinkellenkung der Arbeitsmaschine. Dabei muss die mathematische Struktur des zugrundeliegenden dynamischen Systems bekannt sein. Diese kann in Form einer Zustandsraumdarstellung und/oder in einer speziellen Form als Übertragungsfunktion des Gesamtsystems vorliegen und beinhaltet alle statischen und dynamischen Eigenschaften des Systems bestehend aus Elektrik, Hydraulik und Mechanik. Der Filter kann adaptiv ausgestaltet sein, d.h. die verwendete Zustandsraumdarstellung/Übertragungsfunktion wird selbstlernend während der Systemlaufzeit angepasst.

Der Kalman-Filter arbeitet idealerweise nach dem Prädiktor-Korrektor-Prinzip. Im Prädiktor-Betrieb (Schätzerbetrieb) wird für eine gewisse Zeit ständig geschätzt, im Korrektor-Betrieb die "fehlerhafte" Schätzung durch einen Abtastschritt, d.h. durch einen realen Messwert optimiert/korrigiert. Dem zugrunde liegt eine Normalverteilung mit definierten Standardabweichungen für Messung und Schätzung. Damit kann gesteuert werden, welchem Wert mehr "vertraut" wird. Prädiktor und Korrektor wechseln sich bei vorhandener fehlerfreier Messung ständig ab. Im Fehlerfall wird durchgehend geschätzt (Prädiktor).

Darüber hinaus können mithilfe des Kalman-Filters störungsbehaftete, verrauschte Messsignale gefiltert werden. Vorzugsweise kann durch unterschiedliche Gewichtung festgelegt werden, wie stark die Schätzung in das Ergebnis eingeht und wie stark die Messung Berücksichtigung findet. Hierbei kommt ein statistisches Verfahren, beispielsweise mit zugrunde liegender Normalverteilung zur Anwendung.

Gemäß einer besonders bevorzugten Ausgestaltung ist der Kalman-Filter derart ausgestaltet, sodass die Regelgröße aus den Signalen der Reglerrückkopplung schätzbar ist. Die Zustandsraumdarstellung/Übertragungsfunktion beschreibt folglich das Verhalten der Regelgröße in Abhängigkeit des Reglerausgangssignals.

Wie bereits voranstehend erläutert wurde, kann vorzugsweise die Regelgröße unter Bildung einer Zustandsraumdarstellung und/oder Übertragungsfunktion geschätzt werden. Die Zustandsraumdarstellung und/oder Übertragungsfunktion werden mit Hilfe von Modellparametern beschrieben, insbesondere mit Modellparametern des Lenksystems. Für die Modellerstellung bieten sich unterschiedliche Möglichkeiten an. Gemäß einer ersten Ausgestaltung kann die Identifizierung der benötigten Modellparameter offline erfolgen, d.h. vor Aufnahme des regulären Arbeitsbetriebs der Arbeitsmaschine. Die Werte werden beispielsweise durch Simulationen, Messungen, etc. ermittelt und als festes Modell auf die Arbeitsmaschine übertragen.

Demgegenüber sieht eine Online-Identifikation eine Modellbildung unmittelbar an der Maschine vor. Beispielsweise erfolgt eine Ermittlung zur Laufzeit während des Maschinenbetriebs. Der Kalman-Filter ist folglich adaptiv, die Modellberechnung wird selbstlernend während des Arbeitsbetriebes optimiert. Diese Vorgehensweise erlaubt stets eine optimale Anpassung der Schätzung an die vorliegenden Betriebsbedingungen der Arbeitsmaschine.

Für die Umsetzung einer Online-Identifikation ist innerhalb der Steuerung ein zusätzlicher Online-Identifikationsblock implementiert, der zwischen Positionsmesssystemen und Kalman-Filter integriert ist. Der Online-Identifikationsblock überträgt ständig bzw. periodisch die selbsterlernten aktuellen Modellparametern an den Kalman-Filter für den nachfolgenden Schätzvorgang. Der Online-Identifikationsblock erhält im fehlerfreien Normalbetrieb den aktuellen Messwert des Positionsmesssystems sowie einen Wert des Rückkopplungskreises vom Ausgang des Reglers. Auf Grundlage dieser Informationen und gegebenenfalls unter Berücksichtigung weiterer Parameter kann der Online-Identifikationsblock eine geeignete Übertragungsfunktion und/oder Zustandsraumdarstellung ermitteln.

Wie bereits voranstehend erläutert wurde, umfasst der Kalman-Filter einen Fehlererkennungsblock. Im Fehlerfall erfolgt die Schätzung des Kalman-Filters auf Grundlage der zuletzt im fehlerfreien Zustand übermittelten Modellparameter. Zusätzlich kann durch den Fehlererkennungsblock die Online-Identifikation innerhalb des Online-Identifikationsblocks zeitweise angehalten werden, um den Einfluss der fehlerhaften Messgrößen auf die Modellbildung zu minimieren.

Denkbar ist es, dass der Online-Identifikationsblock Eingangsparameter wie Beladung, Öltemperatur, Untergrund und/oder Gerätetyp der Arbeitsmaschine berücksichtigt.

Der Kalman-Filter kann die Schätzung entweder auf Grundlage der vorherigen Eingangsgrößen vornehmen und/oder als Eingangsgröße die sensorisch erfasste Hauptschieberposition wenigstens eines Lenkventils oder Notlenkventils vornehmen.

In einem vereinfachten Ausführungsbeispiel erstellt der Online-Identifikationsblock lediglich ein Modell erster Ordnung für die Übertragungsfunktion. Beispielsweise bleiben im Modell erster Ordnung Systemschwingungen und/oder Nichtlinearitäten des Systems unberücksichtigt, was die Berechnung und Schätzung stark vereinfacht, jedoch ein hinreichend genaues Schätzergebnis liefert.

Zur Signalisierung eines Fehlerfalls ist es vorstellbar, dass der Steuerungsrechner ein visuelles oder akustisches Signal ausgibt. Der Maschinenführer kann durch Signalausgabe per Lautsprecher oder mittels visuellen Warnsignals am Display über den Fehlereintritt in Kenntnis gesetzt werden.

Neben dem erfindungsgemäßen Lenksystem umfasst die Erfindung zudem ein Verfahren zur Positionsregelung eines elektrohydraulischen Lenksystems für eine Arbeitsmaschine. Die Arbeitsmaschine bzw. das Lenksystem umfasst einen hydraulischen Lenkkreis mit wenigstens einem Lenkventil und wenigstens einem Lenkhydraulikzylinder. Daneben ist ein Steuerungskreis zur Ansteuerung des wenigstens einen Lenkventils des Lenkkreises vorgesehen, wobei zu Steuerungszwecken eine Regeleinheit, eine Steuereinheit, wenigstens ein Steuereingabemittel und ein Positionsmesssystem zur Ermittlung einer Regelgröße vorgesehen sind. Das Positionsmesssystem erzeugt redundante Positionsmesssignale, wobei die Steuerung wenigstens einen implementierten Kalman-Filter und wenigstens einen Fehlererkennungsblock umfasst, mittels dem ein Fehlerfall anhand der redundanten Messsignale erkannt werden kann und im Fehlerfall ein Schätzwert der Regelgröße für die Positionsregelung gebildet und an den Regler übertragen werden kann.

Wie oben ausgeführt, kann der Fehlererkennungsblock und der Kalman-Filter als eine gemeinsame bauliche Einheit oder auch als getrennte Einheiten ausgeführt sein.

Das Verfahren lässt sich vorzugsweise auf Grundlage eines Lenksystems gemäß der vorliegenden Erfindung ausführen. Das Verfahren zeichnet sich demnach durch dieselben Vorteile und Eigenschaften aus, wie sie bereits voranstehend mit Bezug zum Lenksystem näher beschrieben wurden. Auf eine erneute Darstellung wird aus diesem Grund verzichtet.

Weitere Vorteile und Eigenschaften der Erfindung sollen im Folgenden anhand eines in den Figuren dargestellten Ausführungsbeispiels näher erläutert werden.

Es zeigen:
- Figur 1:: ein Blockdiagramm des Hauptkreises der erfindungsgemäßen Lenkanlage,
- Figur 2:: eine Darstellung des erfindungsgemäßen Lenksystems gemäß einer ersten Ausführungsform mit Offline-Identifikation und
- Figur 3:: das erfindungsgemäße Lenksystem mit einer Erweiterung um eine Online-Identifikation.

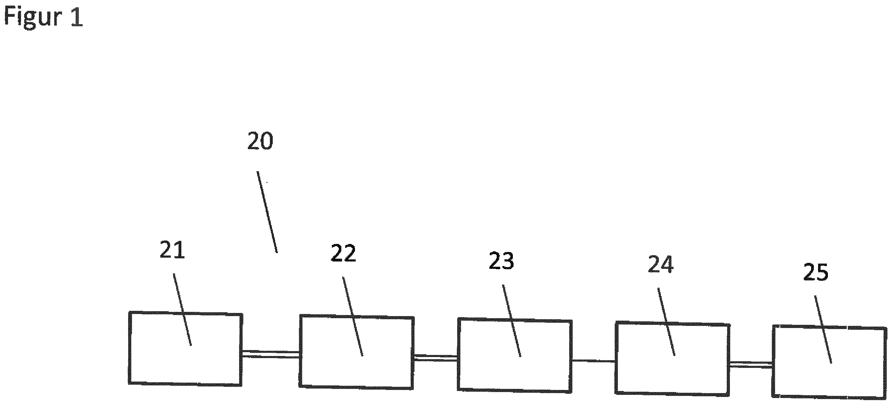

Figur 1 zeigt zunächst den Hauptkreis 20 der Lenkanlage auf Grundlage einer Joysticklenkung. Im Folgenden werden zunächst die einzelnen Hardwarekomponenten des Hauptkreises 20 näher erläutert. Das Positionsmesssystem 21 liefert den aktuellen Lenkwinkel der Lenkanlage. Bei einem Radlader mit Knicklenkung sitzt beispielsweise ein Gelenkwinkelsensor am Drehgelenk der Knickwinkellenkung. Der verbaute Gelenkwinkelsensor kann ein Drehwinkelsensor zur Erfassung der Relativbewegungen zwischen Vorder- und Hinterwagen sein. Alternativen sehen einen Sensor für die Linearmessung vor, der beispielsweise in zumindest einem oder beiden Hydraulikzylindern für die Lenkbewegung integriert ist und die Bewegung der Kolbenstange erfasst. Prinzipiell kann das angewandte Messprinzip des Sensors auf hydraulischer, mechanischer oder elektrischer Basis bzw. einer Kombination daraus arbeiten.

Um den Sensor 21 redundant auszuführen, werden zwei unabhängige Signalspuren gebildet, die entweder spannungs- oder stromeingeprägt sind und entweder analog oder digital im gesamten Steuerungskonzept eingebunden sind, so beispielsweise über das CAN-Protokoll. Die beiden Signalspuren können einzeln verarbeitet oder als gekreuzte Strom- bzw. Spannungssignale ausgegeben werden. Wie in Figur 1 dargestellt, werden beispielhaft redundante Signalwege, zwischen den dargestellten Blöcken mit Bezugszeichen 21, 22 als doppelte, parallele Verbindungslinien dargestellt. Es wird aber darauf hingewiesen, dass diese Redundanz beispielhaft dargestellt wird und sämtliche Signalwege redundant ausgeführt werden können.

Als Eingabemittel für die Führungsgröße der Lenkung dient ein Joystick 22, der sich bei der Arbeitsmaschine innerhalb einer Kabine befindet. An den jeweiligen Flanken eines Fahrersitzes innerhalb der Kabine, beispielsweise im Bereich der Armlehnen, sind ein oder mehrere Joysticks für die Fahrbewegungen vorgesehen. Geeignete Konstruktionen bestehen aus einer Griffschale, die optional mit zusätzlichen Druckknöpfen für Funktionen (Kick-Down-Schalter) ergänzt sind. Die mechanischen Relativbewegungen des Joysticks werden über Gelenkpunkte mittels hydraulischer oder elektrisch arbeitender Sensoren abgegriffen. Die abgegriffenen Signale repräsentieren den Lenk-Sollwinkel und sorgen vereinfacht gesprochen für eine proportionale Steuerung des Hydraulikflusses im Lenkkreis.

Die Joystickbewegungsrichtung für die Lenkbewegung ist vorteilhaft wie die Lenkbewegung selbst quer zur Fahrtrichtung. Andere Bewegungsrichtungen des Joysticks können gesperrt oder funktionslos sein. Die Kombination aus Vorwärts- und Rückwärtsbewegung sowie Lenkbewegungen nach links bzw. rechts sind jedoch auch vorstellbar. Die Sensoren zur Abnahme der Joystickbewegung können wie der Positionsmesssensor 21 ebenfalls redundant ausgeführt sein. Die Erzeugung von Signalen kann über zwei redundante Logiken erfolgen.

Der Master bzw. Regler 23 kann steuerungs-/ regelungstechnisch eigenständig aufgebaut sein. In vielen Fällen wird er aber in die Vehicle Control Unit (VCU) oder der Masterregelung der Arbeitsmaschine implementiert. Alternativ bietet sich die Integration in einem zusätzlichen Steuergerät, einer Getriebesteuerung (TCU) oder der Motorsteuerung (ECU) an. Der Regler selbst kann als PID-Regler, Kompensationsregler oder Zustandsregler ausgestaltet sein.

Das Outputmodul 24 dient zur Ansteuerung des Hauptkreises der Lenkung. Dabei wird das Haupthydraulikventil 25 zur Regelung des Hydraulikflüssigkeitsvolumen von und zum Lenkzylinder mit den Regelausgängen in Form von Stromsignalen gesteuert, so beispielsweise als pulsweitenmoduliertes Signal (PWM-Signal) für den linken und rechten Lenkzylinder.

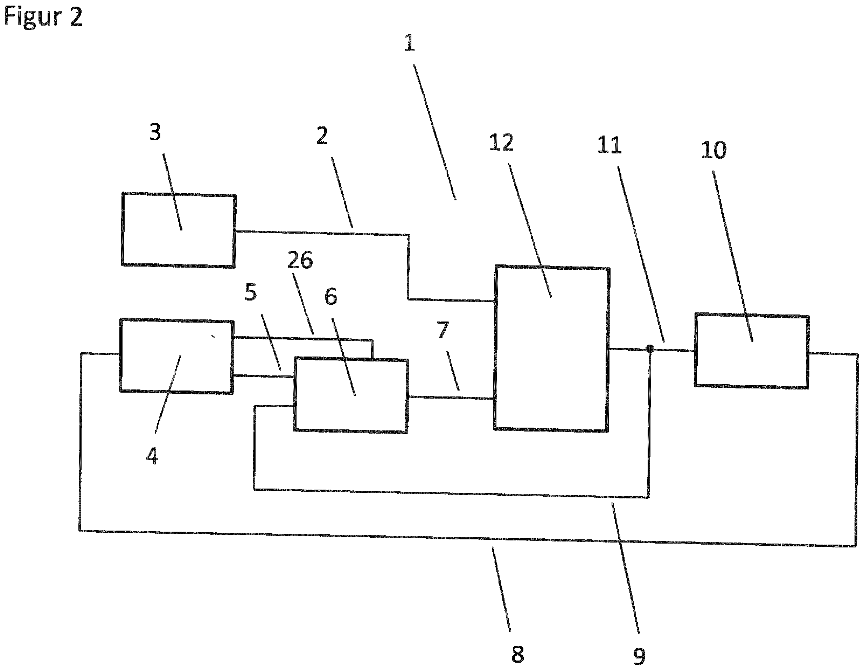

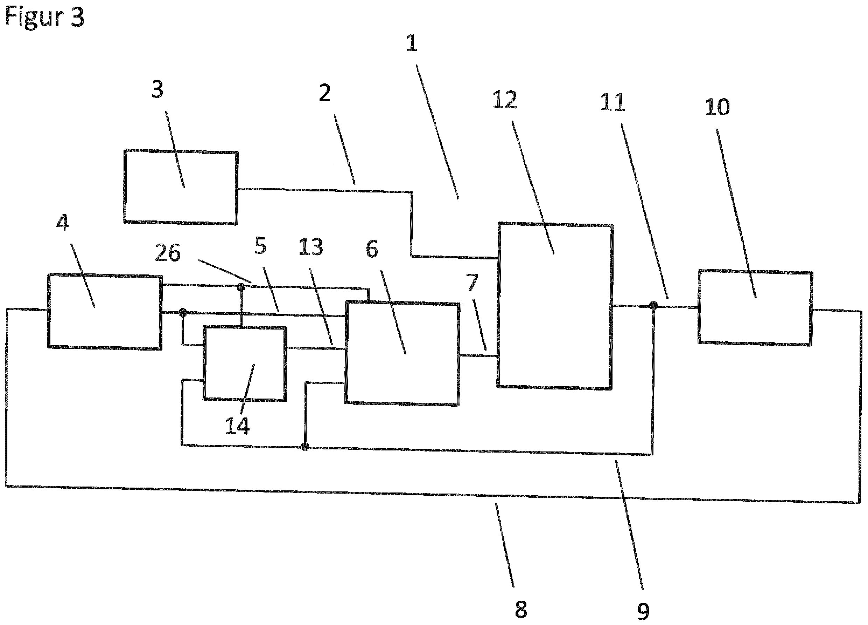

Figuren 2, 3 zeigen Blockdiagrammdarstellungen des erfindungsgemäßen Lenksystem mit Positionsregelung. Figur 2 zeigt ein System, das mit einer sogenannten Offline-Identifikation arbeitet, d.h. es werden vordefinierte feste Modellparameter für die Schätzung der Regelgröße (Lenkwinkel) eingesetzt, während Figur 3 um ein Online-Identifikationsmodul 14 ergänzt ist. Zunächst wird jedoch auf das vereinfachte Modell der Figur 2 Bezug genommen.

Zentrales Element ist hierbei der Kalman-Filter 6, der als Softwareroutine innerhalb der zentralen Steuerung der Maschine implementiert ist. Die Positionsregelung übernimmt der Regler 12, der zum einen von der Verarbeitungseinheit 3 für die Bearbeitung der Joysticksensorsignale des Joysticks 22 den Lenksollwinkel als Eingang erhält und zudem als weiteren Eingang einen Wert für die Regelgröße 7 von dem Kalman-Filter 6 erhält. Als Ausgangssignal erzeugt der Regler 12 entsprechende Stromsignale in Form von PWM-Signalen 11 zur Ansteuerung der Lenkzylinders. Insbesondere dienen die PWM-Signale 11 zur Steuerung der Lenkventile, wobei separate PWM-Signale 11 zur Ansteuerung des linken und rechten Lenkzylinders erzeugt werden.

Der hydraulische Lenkkreis bestehend aus Lenkzylindern, Lenkventilen, Sensoren etc. wird vereinfacht als Block 10 dargestellt. Das System 10 liefert mittels des Positionsmesssystems 21 den gemessenen IST-Lenkwinkel 8, der der Verarbeitungseinheit 4 in Form von zwei redundanten Signalspuren 8 zur Verfügung gestellt wird. Der gemessene Gelenkwinkel wird unter Verwendung der redundanten Spuren 8 innerhalb der Verarbeitungseinheit 4 des Positionsmesssystems berechnet, insbesondere wird aus den eingelesenen gekreuzten Stromsignalen 8 der Gelenkwinkel berechnet und als IST-Winkelwert 5 letztendlich dem Kalman-Filter 6 als Eingangssignal zur Verfügung gestellt. Als weiteren Eingangswert erhält der Kalman-Filter 6 die ausgehende Stellgröße des Reglers 12 in Form der strombasierten Stellsignale (PWM-Signale) für die Ansteuerung der Lenkzylinder.

Der Kalman-Filter 6 wird zum Schätzen des IST-Lenkwinkels (Knickwinkels) eingesetzt. Dazu muss eine mathematische Struktur des zugrunde liegenden dynamischen Lenksystems bekannt sein, um eine hinreichend genaue Schätzung zu ermöglichen. Eine passende mathematische Beschreibung kann in Form einer Zustandsraumdarstellung oder alternativ in Form einer speziellen Übertragungsfunktion des Gesamtsystems erfolgen. Beide Modelldefinitionen beinhalten alle statischen und dynamischen Eigenschaften des Systems bestehend aus Elektrik, Hydraulik und Mechanik.

Die Signale der Verarbeitungseinheit 4, mit den Ausgängen 5 und 26, werden dem Kalman-Filter 6 zugeführt. Dabei bildet der Ausgang 26 den Meßgüteparameter 26 ab, der dem Kalman-Filter 6 entweder einen binären Wert "Messung gültig", "Messung ungültig" übermittelt oder einen der Güte der Messung entsprechenden analogen Wert, der die Qualität der Messung widerspiegelt.

Als Basis für diese Entscheidung werden die redundanten Signalspuren 8 für die Regelgröße herangezogen.

Durch den Fehlererkennungsblock kann ein Kurzschluss bzw. eine Leitungsunterbrechung erkannt werden. Dies ist beispielsweise dann der Fall, wenn wenigstens einer der Messwerte außerhalb eines gültigen Signalbereichs liegt. Als weiterer Fehler kann ein Signaldrift erkannt werden, der sich dadurch auszeichnet, dass beide Messwerte innerhalb eines gültigen Signalbereichs liegen, jedoch stark voneinander abweichend sind. Anhand der Fehler- und Signalauswertungen wird der Meßgüteparameter 26 gebildet.

Dies insbesondere vor dem Hintergrund, dass bei einem Signaldrift nicht festgestellt werden kann, welche Spur ein falsches Signal liefert und damit aus Sicherheitsgründen beide ignoriert werden müssen.

Der Kalman-Filter 6 entscheidet auf Basis des Meßgüteparameters 26, ob die gemessene Regelgröße 5 als Regelgröße dem Regler 12 zugeführt werden kann oder stattdessen eine geschätzte Regelgröße des Kalman-Filters 6, über das Signal 7 an den Regler 12 für die Positionsregelung weitergegeben wird. Es ist auch denkbar, auf Grundlage des Meßgüteparameters 26, eine Kombination aus der gemessenen Regelgröße 5 und der geschätzten Regelgröße zu bilden und diese über das Signal 7 dem Regler 12 zu übermitteln.

Im Kalman-Filter 6 wird die Zustandsraumdarstellung/Übertragungsfunktion abgebildet, die eine Schätzung der Knickwinkelposition aus den Ventilströmen der Lenkventile ermöglicht, die der Kalman-Filter anhand der Stellsignale 11 ableitet. Dabei kann es zu unterschiedlichen Ansprechverhalten zwischen dem linken und rechten Lenkzylinder kommen, sodass auch dies bei der Berechnung des Schätzwinkels berücksichtigt werden muss. Ergänzend kann optional eine gemessene Auslenkung bzw. Wegmessung des Hauptventils, insbesondere des Hauptschiebers, in die Schätzung eingehen und diese damit optimieren. Weitere Möglichkeiten zur Verbesserung der Schätzung sehen die Einbindung von Sensoren wie beispielsweise Drucksensoren (im Hauptkreis) oder Beschleunigungssensoren (am Vorder- oder Hinterwagen) vor.

Zur Schätzung wird entweder auf die Zustandsraumdarstellung oder eine lineare Übertragungsfunktion zurückgegriffen. Bei der Verwendung einer linearen Übertragungsfunktion ergeben sich jedoch gewisse Probleme, die aufgrund der vereinfachten Implementierung in gewissen Fällen in Kauf genommen werden können. Für die Bestimmung der Übertragungsfunktion wird von einem linearen Systemverhalten ausgegangen, was jedoch nicht der Praxis entspricht und dadurch zu Ungenauigkeiten führt, die allerdings im tolerierbaren Bereich liegen. Zudem verhält sich die linke und rechte Fahrzeugseite, d.h. die angesteuerten Lenkzylinder, geringfügig anders, weshalb der Kalman-Filter 6 separate Übertragungsfunktion für die linke und rechte Fahrzeugseite bereitstellen muss, um ein verbessertes Geradeauslenken zu gewährleisten.

Das im Kalman-Filter 6 verwendete Modell für die Schätzung ist im Ausführungsbeispiel der Figur 2 fest hinterlegt, insbesondere wurde dieses anhand vorangehender Simulationen und Test vor der Auslieferung der Arbeitsmaschine an den Kunden erstellt. Im Betrieb der Arbeitsmaschine wird auf Grundlage der eingelesenen gekreuzten Stromsignale 8 der Gelenkwinkel berechnet. Dies erfolgt innerhalb der Verarbeitungseinheit 4, die dann einen einzigen Winkelwert 5 an den Kalman-Filter 6 weiterleitet. Des Weiteren übermittelt die Verarbeitungseinheit 4 den Meßgüteparameter 26, durch welchen der Kalman-Filter 6, den Prädiktor-Korrektorbetrieb steuern kann.

Im fehlerfreien Betrieb arbeitet der Filter 6 als sogenannter Prädiktor-Korrektor.

Der Kalman-Filter 6 schätzt stets für eine gewisse Zeit den Lenkwinkel unter Verwendung eines mathematischen Modells (Prädiktor). Auf Grund von Abweichungen des hinterlegten Modells zum realen Verhalten des Lenkungssystems, entstehen Abweichungen zwischen der Schätzung und der realen Regelgröße. Die sozusagen "fehlerhafte Schätzung" des Lenkwinkels wird durch einen Abtastschritt, d.h. eine Messung des aktuellen Lenkwinkels 5 verbessert und korrigiert (Korrektor).

Zu Grunde liegt hierbei eine Normalverteilung mit definierten Standardabweichungen für Messung und Schätzung. Dadurch lässt sich gezielt steuern, welcher der beiden Werte vertrauenswürdiger ist. Im fehlerfreien Fall wechseln die Prädiktor und Korrektor Funktion ständig ab. An den Regler 12 wird demnach eine Kombination aus gemessener und geschätzter Regelgröße übermittelt oder als weitere Varianten, ausschließlich die gemessene oder die geschätzte Regelgröße verwendet (Signal 7).

Ein Problem der Offline-Identifikation der Modellparameter für die Zustandsraumdarstellung/ Übertragungsfunktion ist jedoch, dass diese die tatsächlichen Betriebsbedingungen der Arbeitsmaschine unter Umständen nur unzureichend abbilden. Beispielsweise können unterschiedliche Beladungen, Öltemperaturschwankungen und Untergrundgegebenheiten Einfluss auf die Systemdynamik haben. Diese Größen werden jedoch von der Offline-Identifikation prinzipbedingt nicht berücksichtigt. Zudem ist für jeden Gerätetyp, eventuell sogar jede Maschine, eine individuelle Identifizierung der Modellparameter notwendig.

Aufgrund der beiden Punkte kann eine Online Identifikation mit adaptivem Kalman-Filter wünschenswert sein. Dadurch entsteht ein selbstlernendes System, welches im Normalbetrieb (Knickwinkelsensor verfügbar) die Übertragungsfunktion online identifiziert und die Modellparameter an den Kalman-Filter 6 weitergibt. Innerhalb einiger Lenkbewegungen kann dabei immer die aktuelle Übertragungsfunktion ermittelt werden und der Kalman-Filter 6 kann bei Sensor-Ausfall mit den aktuellen Modellparametern den Lenkwinkel schätzen.

Ein Ausführungsbeispiel mit Online-Identifikation ist der Figur 3 zu entnehmen. Im Vergleich zur Figur 2 ist hier ein zusätzlicher Block "Online Identifikation" 14 integriert, der während der Maschinenlaufzeit die aktuellen Modellparameter ermittelt und an den Kalman-Filter 6 weiterreicht. Der Kalman-Filter 6 beinhaltet demnach ein adaptives Modell (Zustandsraumdarstellung/Übertragungsfunktion). Die verbleibenden Komponenten sind identisch zum Ausführungsbeispiel der Figur 2 und werden folglich mit gleichen Bezugszeichen versehen.

Die Vorteile der Online-Identifikation bestehen darin, dass Größen wie die aktuelle Maschinenbeladung, die Öltemperatur und der Untergrund innerhalb weniger Lenkbewegungen im Modell berücksichtigt werden können. Bei Ausfall des Knickwinkelsensors steht somit ein genaueres Modell für die Schätzung zur Verfügung. Selbiges gilt für alle unterschiedlichen Gerätetypen. Da das Modell online identifiziert wird, ist dieselbe Struktur direkt für alle Gerätetypen gleichermaßen anwendbar.

Falls die Schätzung zu ungenau sein sollte kann wie in der Ausführung gemäß Figur 2 die Position des Hauptschiebers der Lenkventile für die Schätzung Berücksichtigung finden bzw. dieser Messwert anstelle des aus den Stellsignalen 11 abgeleiteten Ventilstromes verwendet werden. Eine weitere Optimierungsmöglichkeit zur Verbesserung der Schätzung besteht in der Einbindung von weiteren Sensormesswerten, die beispielsweise den Druck im Hauptkreis oder die auftretende Beschleunigung am Vorder- und Hinterwagen erfassen.

Es kann auch ausreichend sein nur ein Modell 1.Ordnung für die Zustandsraumdarstellung/Übertragungsfunktion zu wählen. Das wäre eine wesentliche Vereinfachung für die Online- Identifikation und den Kalman-Filter 6. Hierbei können Schwingungen oder diverse Nichtlinearitäten nicht berücksichtigt werden.

Die Funktionsweise der Lenkung mittels Kalman-Filter und Online-Identifikation der Übertragungsfunktion soll im Folgenden kurz wiedergegeben werden. Die Ermittlung des Gelenkwinkels 5 erfolgt analog zum Ausführungsbeispiel der Figur 2, indem aus den eingelesenen gekreuzten Stromsignalen 8 ein Gelenkwinkel berechnet wird. Zur Ermittlung der Übertragungsfunktion führt das Online-Identifikationsmodul 14 einen sogenannten RLS-Algorithmus (Recursive least squares) aus, der die Lenkungs-Übertragungsfunktion zwischen Gelenkwinkel und Ansteuersignalen 11 online ermittelt. Die Übertragungsfunktion ist vorerst eine Funktion 1. Ordnung, Funktionsmodelle höherer Ordnung sind jedoch nicht ausgeschlossen. Aufgrund des unterschiedlichen Ansprechverhaltens zwischen linker und rechter Fahrzeugseite werden für beide Fahrzeugseiten getrennte Übertragungsfunktion ermittelt, da beispielsweise eine Seite aggressiver ansprechen kann und der Schätzer dadurch in eine Seite abdriften könnte. Zudem sieht die Übertragungsfunktion einen wählbaren Vergessensfaktor vor, der Vorgaben zur Priorisierung der Schätzwerte vorsieht. Insbesondere lässt sich dadurch feinjustieren, wie stark neue Werte in die Schätzung eingehen sollen bzw. welche Rolle vergangene Werte spielen sollen. Bei unterschiedlicher Beladung/Öltemperatur/Untergrund ändert sich die Lenkungsdynamik und damit die Übertragungsfunktion. Über die Online-Identifikation lernt das System automatisch innerhalb von einigen Lenkbewegungen und liefert dem Schätzer die aktuellen Parameter. Verschiedene Gerätetypen und damit unterschiedliche Lenkungsverhalten können ohne großen manuellen Parametrieraufwand unterstützt werden, da die Parameter automatisch identifiziert werden.

Der Kalman-Filter 6 arbeitet ebenfalls als Prädiktor/Korrektor, wobei der Filter auf Basis des im Online-Identifikationsblock 14 bestimmten adaptiven mathematischen Modells (Übertragungsfunktion) den Gelenkwinkel "schätzt". Es wird die dynamisch ermittelte Lenkungs-Übertragungsfunktion des RLS Algorithmus verwendet.

### Bezugszeichenliste:

1 Lenkfunktion mit Positionsregelung
2 Signal 1, Winkel Soll
3 Verarbeitung Joystick
4 Verarbeitung Positionsmesssensor
5 Signal 2, Winkel Messung
6 Kalman-Filter
7 3, Winkel Kalman
8 Signal 4, Winkel Ist
9, 11 Signal 5, Signal 6, Strom PWM
10 System (Hydraulik, Mechanik, Elektrik)
12 Regler
13 Signal 7, Modellparameter
14 Online Identifikation
20 Joysticklenkung Hauptkreis
21 Positionsmesssystem
22 Joystick
23 Masterregelung
24 Outputmodul
25 Hauptlenkventil
26 Meßgüteparameter

## Patentansprüche

1. Positionsgeregeltes, elektrohydraulisches Lenksystem (1) für eine Arbeitsmaschine, insbesondere für einen Radlader, umfassend:
einen hydraulischen Lenkkreis (10) mit einem Lenkventil (25), einem Lenkhydraulikzylinder sowie einem Steuerungskreis (20) zur Ansteuerung des Lenkventils (25), wobei
der Steuerungskreis (20) eine Regeleinheit (23), eine Steuerung (24), ein Steuereingabemittel (22) und ein Positionsmesssystem (21) zur Ermittlung einer Regelgröße aufweist, und
das Positionsmesssystem (21) Mittel zur Erzeugung redundanter Positionsmesssignale umfasst,
**dadurch gekennzeichnet, dass**
zwischen Positionsmesssystem (21) und Regeleinheit (23) ein Kalman-Filter (6) vorgesehen ist, das einen Schätzwert der Regelgröße für die Positionsregelung ermittelt, und
das Lenksystem (1) des Weiteren einen Fehlererkennungsblock (4) umfasst, der anhand der redundanten Messsignale (8) einen Fehler des Positionsmesssystems (21) erkennt, wobei
das Kalman-Filter (6) in Kombination mit dem Fehlererkennungsblock (4) eine Entscheidungslogik umfasst, die dazu ausgelegt ist, zu entscheiden, ob die gemessenen Positionsmesssignale (5) als Ist-Größe und/oder die geschätzte Regelgröße als Eingangssignal (7) für den Regler (12) verwendet wird, wobei im fehlerfreien Fall die gemessenen Postionsmesssignale (5) und/oder eine Kombination zwischen gemessenen und geschätzten Positionssignalen zur Positionsregelung verwendet werden und im Fehlerfall auf die geschätzte Regelgröße gewechselt wird.

2. Positionsgeregeltes elektrohydraulischen Lenksystem (1) nach Anspruch 1, wobei es sich bei dem Fehler des Pösitionsmesssystems (21) um einen elektrischen Fehler wenigstens eines Sensors handelt, wie beispielsweise um eine Leitungsunterbrechung, einen Kurzschluss oder einen Signaldrift.

3. Positionsgeregeltes, elektrohydraulisches Lenksystem (1) nach einem der vorhergehenden Ansprüche, wobei das Kalman-Filter (6) derart ausgestaltet ist, so dass die Regelgröße aus den Signalen der Regler-Rückkopplung schätzbar ist, insbesondere aus den Ansteuersignalen für ein oder mehrere Lenkzylinder des hydraulischen Lenkkreises (10).

4. Positionsgeregeltes, elektrohydraulisches Lenksystem (1) nach einem der vorhergehenden Ansprüche, wobei es sich bei dem Positionsmesssignal um den Knickwinkel einer Knicklenkung der Arbeitsmaschine handelt.

5. Positionsgeregeltes, elektrohydraulisches Lenksystem (1) nach einem der vorhergehenden Ansprüche, wobei das Kalman-Filter (6) derart ausgestaltet ist, so dass die Regelgröße unter Bildung einer Zustandsraumdarstellung und/oder Übertragungsfunktion geschätzt wird, wobei die Zustandsraumdarstellung und/oder Übertragungsfunktion auf Grundlage von Modellparametern des Lenksystems basiert und die Modellparameter offline oder online identifizierbar sind.

6. Positionsgeregeltes, elektrohydraulisches Lenksystem (1) nach den Anspruch 5, **dadurch gekennzeichnet, dass** bei einer Online Identifikation wenigstens ein zusätzlicher Online-Identifikationsblock (14) zwischen Positionsmesssystem (21) und Kalman-Filter (6) vorgesehen ist, der selbstlernend aktuelle Modellparameter an das Kalman-Filter (6) während der Systemlaufzeit übermittelt.

7. Positionsgeregeltes, elektrohydraulisches Lenksystem (1) nach Anspruch 5 oder 6, **dadurch gekennzeichnet, dass** der Online-Identifikationsblock (14) im Normalbetrieb in einem ersten Eingangspfad den Messwert des Positionsmesssystem (21) und in einem zweiten Eingangspfad einen Rückkopplungskreis vom Ausgang des Reglers (12) abgreift und auf Grundlage dieser Eingänge die Übertragungsfunktion und/oder Zustandsraumdarstellung ermittelt und die Modellparameter dem Kalman-Filter (6) zur Verfügung stellt.

8. Positionsgeregeltes, elektrohydraulisches Lenksystem (1) nach einem der Ansprüche 6 bis 7, **dadurch gekennzeichnet, dass** das Kalman-Filter (6) bei Detektion eines fehlerbehafteten Positionsmesssignals (5) mit den letztgültigen Modellparametern die Regelgröße schätzt und gegebenenfalls die Online-Identifikation der Modellparameter durch den Online-Identifikationsblock (14) stoppt.

9. Positionsgeregeltes, elektrohydraulisches Lenksystem (1) nach einem der Ansprüche 6 bis 8, **dadurch gekennzeichnet, dass** der Online-Identifikationsblock (14) Eingangsparameter wie Beladung, Öltemperatur, Untergrund und/oder Gerätetyp berücksichtigt.

10. Positionsgeregeltes, elektrohydraulisches Lenksystem (1) nach einem der Ansprüche 5 bis 9, **dadurch gekennzeichnet, dass** das Kalman-Filter (6) für die Schätzung als Eingangsgröße die Reglerrückkopplung und/oder die sensorisch erfasste Hauptschieberposition wenigstens eines Lenkventils (25) und/oder Notlenkventils erhält.

11. Positionsgeregeltes, elektrohydraulisches Lenksystem (1) nach Anspruch 10, **dadurch gekennzeichnet, dass** der Identifikationsblock (14) ein Modell erster Ordnung für die Übertragungsfunktion vorsieht, wobei vorzugsweise Systemschwingungen und/oder Nichtlinearitäten des Systems keine Berücksichtigung finden.

12. Positionsgeregeltes, elektrohydraulisches Lenksystem (1) nach einem der vorherigen Ansprüche, **dadurch gekennzeichnet, dass** bei einer Fehlerausgabe am Fehlererkennungsblock der Steuerungsrechner ein visuelles und/oder akkustisches Signal auslöst, beispielsweise durch Ausgabe über einen Lautsprecher oder ein visuelles Warnsignal am Display des Fahrerstandes.

13. Arbeitsmaschine, insbesondere Radlader, mit einem positionsgeregelten, elektrohydraulischen Lenksystem (1) gemäß einem der vorhergehenden Ansprüche.

14. Verfahren zur Positionsregelung eines elektrohydraulischen Lenksystem (1) für eine Arbeitsmaschine gemäß Anspruch 13, wobei das Lenksystem wenigstens einen hydraulischen Lenkkreis (10) mit wenigstens einem Lenkventil (25) und wenigstens einem Lenkhydraulikzylinder und wengistens einen Steuerungskreis (20) zur Ansteuerung des wenigstens einen Lenkventils (25) des Lenkkreises mit wenigstens einer Regeleinheit (23), wenigstens einem Steuereingabemittel (22) und wenigstens einem Positionsmesssystem (21) zur Ermittlung einer Regelgröße umfasst, **dadurch gekennzeichnet, dass** das Positionsmesssystem (21) redundante Positionsmesssignale erzeugt und ein Kalman-Filter (6) einen Schätzwert der Regelgröße für die Positionsregelung ermittelt und ein Fehlererkennungsblock anhand der redundanten Messsignale einen Fehler des Positionsmesssystems erkennt.

## Claims

1. A position-regulated, electrohydraulic steering system (1) for a work machine, in particular for a wheeled loader, comprising:
a hydraulic steering circuit (10) having a steering valve (25), a steering hydraulic cylinder, and a control circuit (20) for controlling the steering valve (25), wherein
the control circuit (20) has a regulation unit (23), a control (24), a control input means (22), and a position measurement system (21) for determining a control variable; and wherein
the positioning measurement system (21) comprises means for generating redundant position measurement signals,
**characterized in that**
a Kalman filter (6) that determines an estimated value of the control variable for the position regulator is provided between the position measurement system (21) and the regulation unit (21); and
**in that** the steering system (1) further comprises an error recognition block (4) that recognizes an error of the position measurement system (21) with reference to the redundant measurement signals (8), with
the Kalman filter (6) comprising, in combination with the error recognition block (4), a decision logic that is configured to decide whether the measured position measurement signals (5) are used as the actual value and/or whether the estimated control variable is used as the input signal (7) for the regulator (12), with the measured position measurement signals (5) and/or a combination between the measured and estimated position signals being used for the position regulation in the error-free case and with a switch being made to the estimated control variable in the error case.

2. A position regulated, electrohydraulic steering system (1) in accordance with claim 1, wherein the error of the position measurement system (21) is an electrical error of at least one sensor such as a line break, a short circuit, or a signal drift.

3. A position regulated, electrohydraulic steering system (1) in accordance with one of the preceding claims, wherein the Kalman filter (6) is configured such that the control variable can be estimated from the signals of the regulator feedback, in particular from the control signals for one or more steering cylinders of the hydraulic steering circuit (10).

4. A position regulated, electrohydraulic steering system (1) in accordance with one of the preceding claims, wherein the position measurement signal is the articulation angle of an articulated steering of the work machine.

5. A position regulated, electrohydraulic steering system (1) in accordance with one of the preceding claims, wherein the Kalman filter (6) is configured such that the control variable is estimated while forming a state control representation and/or a transfer function, with the state control representation and/or the transfer function being based on the principle of model parameters of the steering system and with the model parameters being identifiable offline or online.

6. A position regulated, electrohydraulic steering system (1) in accordance with claim 5, **characterized in that**, on an online identification, at least one additional online identification block (14) is provided between the position measurement system (21) and the Kalman filter (6) and transmits current model parameters in a self-teaching manner to the Kalman filter (6) during the system run time.

7. A position regulated, electrohydraulic steering system (1) in accordance with claim 5 or claim 6, **characterized in that** the online identification block (14) taps the measurement value of the position measurement system (21) in normal operation in a first input path and taps a feedback circuit from the output of the regulator (12) in a second input path and determines the transfer function and/or the state space representation on the basis of these inputs and provides the model parameters to the Kalman filter (6).

8. A position regulated, electrohydraulic steering system (1) in accordance with one of the claims 6 to 7, **characterized in that** the Kalman filter (6) estimates the control variable using the last-valid model parameters on a detection of an erroneous position measurement signal (6) and, where necessary, stops the online identification of the model parameters by the online identification block (14).

9. A position regulated, electrohydraulic steering system (1) in accordance with one of the claims 6 to 8, **characterized in that** the online identification block (14) takes account of input parameters such as load, oil temperature, surface and/or device type.

10. A position regulated, electrohydraulic steering system (1) in accordance with one of the claims 5 to 9, **characterized in that** the Kalman filter (6) receives the regulator feedback and/or the main slide position of at least one steering valve (25) and/or at least one emergency steering valve detected by a sensor for the estimation as an input value.

11. A position regulated, electrohydraulic steering system (1) in accordance with claim 10, **characterized in that** the identification block (14) provides a first order model for the transfer function, with system oscillations and/or nonlinearities of the system preferably not being taken into account.

12. A position regulated, electrohydraulic steering system (1) in accordance with one of the preceding claims, **characterized in that**, on an error output at the error recognition block, the control processor triggers a visual and/or acoustic signal, for example by outputting via a loudspeaker or a visual warning signal at the display of the driver's cab.

13. A work machine, in particular a wheeled loader, having a position regulated, electrohydraulic steering system (1) in accordance with one of the preceding claims.

14. A method for the position regulation of an electrohydraulic steering system (1) for a work machine in accordance with claim 13, wherein the steering system comprises at least one hydraulic steering circuit (10) having at least one steering valve (25) and at least one hydraulic steering cylinder and at least one control circuit (20) for controlling the at least one steering valve (25) of the steering circuit with at least one regulation unit (23), at least one control input means (22), and at least one position measurement system (21) for determining a control variable. **characterized in that** the position measurement system (21) generates redundant position measurement signals; **in that** a Kalman filter (6) determines an estimated value of the control variable for the position regulation; and an error recognition block recognizes an error of the position measurement system with reference to the redundant measurement signals.

## Revendications

1. Système de direction (1) électrohydraulique à réglage de position pour une machine de travail, en particulier pour un chargeur sur pneus, comprenant :
un circuit de direction hydraulique (10) doté d'une soupape de direction (25), d'un vérin hydraulique de direction ainsi que d'un circuit de commande (20) pour la commande de la soupape de direction (25), dans lequel
le circuit de commande (20) comporte une unité de réglage (23), un dispositif de commande (24), un moyen d'entrée de commande (22) et un système de mesure de position (21) pour déterminer une grandeur de réglage, et
le système de mesure de position (21) comprend des moyens destinés à générer des signaux de mesure de position redondants,
**caractérisé en ce que**
entre le système de mesure de position (21) et l'unité de réglage (23) est prévu un filtre de Kalman (6), qui détermine une valeur estimée de la grandeur de réglage pour le réglage de la position, et
le système de direction (1) comprend en outre un bloc de détection d'erreur (4), qui détecte une erreur du système de mesure de position (21) à l'aide des signaux de mesure (8) redondants, dans lequel
le filtre de Kalman (6) en combinaison avec le bloc de détection d'erreur (4) comprend une logique de décision, qui est conçue pour décider si les signaux de mesure de position (5) mesurés sont utilisés comme grandeur réelle et/ou la grandeur de réglage estimée est utilisée comme signal d'entrée (7) pour le régulateur (12), dans lequel en cas d'absence d'erreur, les signaux de mesure de position (5) mesurés et/ou une combinaison entre les signaux de position mesurés et estimés sont utilisés pour le réglage de la position et, en cas d'erreur, le système commute sur la grandeur de réglage estimée.

2. Système de direction (1) électrohydraulique à réglage de position selon la revendication 1, dans lequel l'erreur du système de mesure de position (21) est une erreur électrique d'au moins un capteur, par exemple une coupure de ligne, un court-circuit ou une dérive du signal.

3. Système de direction (1) électrohydraulique à réglage de position selon l'une des revendications précédentes, dans lequel le filtre de Kalman (6) est conçu de telle manière que la grandeur de réglage peut être estimée à partir des signaux du retour du régulateur, en particulier à partir des signaux de commande pour un ou plusieurs vérins de direction du circuit de direction hydraulique (10).

4. Système de direction (1) électrohydraulique à réglage de position selon l'une des revendications précédentes, dans lequel le signal de mesure de position est l'angle d'articulation d'une direction par châssis articulé de la machine de travail.

5. Système de direction (1) électrohydraulique à réglage de position selon l'une des revendications précédentes, dans lequel le filtre de Kalman (6) est conçu de telle manière que la grandeur de réglage est estimée en formant une représentation d'état et/ou une fonction de transfert, la représentation d'état et/ou la fonction de transfert étant basées sur le principe de paramètres du modèle du système de direction et les paramètres du modèle pouvant être identifiés hors ligne ou en ligne.

6. Système de direction (1) électrohydraulique à réglage de position selon la revendication 5, **caractérisé en ce que** dans le cas d'une identification en ligne, au moins un bloc d'identification en ligne (14) supplémentaire est prévu entre le système de mesure de position (21) et le filtre de Kalman (6), qui transmet de manière autodidacte des paramètres du modèle actuels au filtre de Kalman (6) pendant le temps d'exécution du système.

7. Système de direction (1) électrohydraulique à réglage de position selon la revendication 5 ou 6, **caractérisé en ce que** le bloc d'identification en ligne (14), en fonctionnement normal, prélève dans un premier chemin d'entrée la valeur de mesure du système de mesure de position (21) et dans un second chemin d'entrée un circuit de retour de la sortie du régulateur (12) et sur la base de ces entrées, détermine la fonction de transfert et/ou la représentation d'état et fournit les paramètres du modèle au filtre de Kalman (6).

8. Système de direction (1) électrohydraulique à réglage de position selon l'une des revendications 6 et 7, **caractérisé en ce que**, lors de la détection d'un signal de mesure de position (5) défectueux, le filtre de Kalman (6) estime la grandeur de réglage avec les derniers paramètres du modèle valides et arrête le cas échéant l'identification en ligne des paramètres du modèle par le bloc d'identification en ligne (14).

9. Système de direction (1) électrohydraulique à réglage de position selon l'une des revendications 6 à 8, **caractérisé en ce que** le bloc d'identification en ligne (14) prend en compte des paramètres d'entrée tels que la charge, la température de l'huile, le sol et/ou le type d'appareil.

10. Système de direction (1) électrohydraulique à réglage de position selon l'une des revendications 5 à 9, **caractérisé en ce que**, pour l'estimation, le filtre de Kalman (6) reçoit comme grandeur d'entrée le retour du régulateur et/ou la position de la vanne principale détectée par capteur d'au moins une soupape de direction (25) et/ou soupape de direction de secours.

11. Système de direction (1) électrohydraulique à réglage de position selon la revendication 10, **caractérisé en ce que** le bloc d'identification (14) prévoit un modèle de premier ordre pour la fonction de transfert, des oscillations du système et/ou des non-linéarités du systèmes n'étant de préférence pas prises en compte.

12. Système de direction (1) électrohydraulique à réglage de position selon l'une des revendications précédentes, **caractérisé en ce que**, en cas de sortie d'erreur sur le bloc de détection d'erreur, l'ordinateur de commande déclenche un signal visuel et/ou sonore, par exemple par une sortie sur un haut-parleur ou un signal d'avertissement visuel sur l'écran du poste de conduite.

13. Machine de travail, en particulier chargeur sur pneus, comprenant un système de direction (1) électrohydraulique à réglage de position selon l'une des revendications précédentes.

14. Procédé de réglage de la position d'un système de direction (1) électrohydraulique pour une machine de travail selon la revendication 13, dans lequel le système de direction comprend au moins un circuit de direction hydraulique (10) doté d'au moins une soupape de direction (25) et d'au moins un vérin hydraulique de direction, et au moins un circuit de commande (20) destiné à la commande de l'au moins une soupape de direction (25) du circuit de direction, comprenant au moins une unité de réglage (23), au moins un moyen d'entrée de commande (22) et au moins un système de mesure de position (21) pour déterminer une grandeur de réglage, **caractérisé en ce que** le système de mesure de position (21) génère des signaux de mesure de position redondants et un filtre de Kalman (6) détermine une valeur estimée de la grandeur de réglage pour le réglage de la position et un bloc de détection d'erreur détecte une erreur du système de mesure de position à l'aide des signaux de mesure redondants.
